# EUROPÄISCHE PATENTSCHRIFT

(11) **EP 0 598 987 B1**
(45) Veröffentlichungstag und Bekanntmachung des Hinweises auf die Patenterteilung: **02.10.1996**
(21) Anmeldenummer: 93112270.9
(22) Anmeldetag: 30.07.1993
(51) Int. Cl.: C03C 3/06, C03C 1/00

(54) **Verfahren zur Herstellung eines dotierten Quarzglases, dotiertes Quarzglas und elektrische Lampe mit Bestandteilen aus dotiertem Quarzglas**
Doped quartz glass, process for its manufacture and electric lamp comprising doped quartz glass components
Verre de quartz dopé, procédé pour sa préparation, et lampe électrique comprenant des composantes en verre de quarz dopé

(30) Priorität: 27.11.1992 DE 4240006
(43) Veröffentlichungstag der Anmeldung: 01.06.1994
(73) Patentinhaber: Patent-Treuhand-Gesellschaft für elektrische Glühlampen mbH, 81543 München (DE)
(72) Erfinder: Langer, Alfred, D-86438 Kissing (DE); Deisenhofer, Manfred, D-83714 Unterschöneberg/Altenmünster (DE); Reichardt, Jürgen, D-86830 Schwabmünchen (DE)

(56) Entgegenhaltungen:
- EP-A- 0 264 996
- EP-A- 0 478 059
- DE-A- 1 496 072
- GLASTECHNISCHE BERICHT Bd. 61, Nr. 8 , August 1988 , FRANKFURT,DE Seiten 218 - 222 LACKA ET AL.
- CHEMICAL ABSTRACTS, vol. 107, no. 14, 5. Oktober 1987, Columbus, Ohio, US; abstract no. 119968q, Z.PAN Seite 276 ;Spalte R ;

## Beschreibung

Die Erfindung betrifft ein Verfahren zur Herstellung eines dotierten Quarzglases gemäß dem Oberbegriff des Patentanspruchs 1. Außerdem umfaßt die Erfindung ein dotiertes Quarzglas entsprechend dem obengenannten Herstellungsverfahren sowie elektrische Lampen mit Bestandteilen aus diesem dotierten Quarzglas.

In der EP 0 019 327 B1 ist ein Herstellungsverfahren für dotiertes Quarzglas offenbart, bei dem das dotierte Quarzglas aus Quarzpulver und einem Konzentrat erschmolzen wird, wobei das Konzentrat seinerseits aus einem gesinterten und vorgeschmolzenen Gemisch aus einem Dotierungsstoff und Quarzpulver besteht. Das Quarzpulver wird dabei zusammen mit dem Konzentrat in einer He/H₂-Schutzgasatmosphäre, wie dieses in der US 3 764 286 beschrieben ist, geschmolzen. Als Schmelzofen wird dafür üblicherweise ein Wolframtiegel verwendet.

Ein gravierender Nachteil dieses Verfahrens besteht darin, daß zur Herstellung des dotierten Quarzglases zwei Schmelzprozesse erforderlich sind.

Es ist die Aufgabe der Erfindung, ein kostengünstiges Verfahren zur Herstellung eines dotierten Quarzglases, das eine geringe Durchlässigkeit im ultravioletten Spektralbereich aufweist, bereitzustellen.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Das erfindungsgemäße Verfahren kommt zur Herstellung des dotierten Quarzglases mit einem einzigen Schmelzvorgang aus und ist daher wesentlich kostengünstiger als das Herstellungsverfahren gemäß dem Stand der Technik. Die UV-Transparenz des erfindungsgemäßen Quarzglases wird durch die UV-Strahlen absorbierende Wirkung der Cerionen, die in Form von Ceraluminat (CeAlO₃) dem Ausgangsprodukt für die Quarzschmelze zugesetzt sind, reduziert. Die Verwendung von Ceraluminat zur Dotierung des Quarzglases mit dem UV-Absorber Cer bringt einige entscheidende Vorteile, die hier im folgenden näher erläutert werden.
Beim Ceraluminat handelt es sich um eine an Luft beständige, stabile chemische Verbindung, die, im Gegensatz zum häufig als Dotierungsmittel benutzten Ceroxid, im Schmelzofen während der Quarzglasherstellung keinen Sauerstoff freisetzt. Damit ermöglicht das erfindungsgemäße Verfahren erstmalig die Herstellung von cerhaltigem Quarzglas in einem sogenannten einstufigen Herstellungsverfahren, bei dem das dotierte Quarzglas in einem Wolframtiegel unter Schutzgasatmosphäre kontinuierlich erschmolzen und mittels Düse und Dorn aus Molybdän kontinuierlich zu einem Rohr ausgezogen wird, ohne daß der Wolframtiegel durch Oxidationsprozesse Schaden nimmt und Wolframeinschlüsse im Quarzglas auftreten. Dieses Verfahren ist erheblich kostengünstiger -- etwa um einen Faktor fünfzehn -- als die sogenannten zweistufigen Herstellungsverfahren, bei denen der Rohstoff zunächst zu einem Quarzglasblock bzw. "Ingot" erschmolzen wird und die Formgebung erst in einem zweiten Schmelzprozeß erfolgt.

Von herausragender Bedeutung ist auch das in Form des Ceraluminats dem Quarzglas gleichzeitig mit dem Cer zugesetzte Aluminium. Das Aluminium erhöht die Löslichkeit des Cers im Quarzglas und erlaubt es, mit Hilfe des erfindungsgemäßen Herstellungsverfahrens ein sehr homogenes Quarzglas mit besonders hohem Cergehalt herzustellen. Das durch das Ceraluminat vorgegebene Gewichtsverhältnis von Cer zu Aluminium von etwa 5,2:1 (das entspricht dem Quotienten der Atomgewichte von Cer und Aluminium) bzw. Molverhältnis von 1:1 hat sich als besonders günstig für die Löslichkeit des Cers im Quarzglas erwiesen. Um ein möglichst homogenes Quarzglas, frei von mechanischen Spannungen, zu erhalten, wird das Ceraluminat dem Ausgangsprodukt für die Quarzschmelze in Pulverform, vorteilhafterweise mit einer mittleren Korngröße kleiner oder gleich 20 µm, beigemischt. Es hat sich als be-sonders günstig erwiesen, das Ceraluminat durch eine Festkörperreaktion in der Art, daß eine Ansatzmischung aus Aluminiumoxid (Al₂O₃) und Ceroxid (CeO₂) mit Borsäure (H₃BO₃) als Mineralisatorhilfe in reduzierender Atmosphäre einer Glühung unterzogen wird. Vorteilhafterweise enthält die Ansatzmischung einen etwa zehnprozentigen Aluminiumoxidüberschuß bzgl. der stöchiometrischen Zusammensetzung des Ceraluminats (CeAlO₃), wodurch eine einheitliche und vollständige Umsetzung des Ceroxids im Glühprozeß erreicht wird.

Der Ceraluminatanteil im Ausgangsprodukt für die Quarzschmelze kann bis zu ca. 5 Gewichtsprozent betragen, bevor die Löslichkeitsgrenze des Cers im Quarz erreicht ist und Inhomogenitäten im erschmolzenen Quarzglas auftreten. Vorteilhafterweise werden allerdings der Quarzschmelze weniger als 2 Gewichtsprozent Ceraluminat beigesetzt, um einer erhöhten Blasigkeit des Glases vorzubeugen. Außerdem kann die Durchlässigkeit des Quarzglases für kurzwellige ultraviolette Strahlung (UV-C-Strahlung) durch Zusatz von Titanoxid (TiO₂) als weiteres Dotierungsmittel noch weiter reduziert werden. Überraschenderweise hat sich auch gezeigt, daß der fertige Quarzglaskörper eine nochmals verminderte UV-Transmission aufweist, nachdem er einem Glühprozeß in einer Sauerstoffatmosphäre bei einer Temperatur zwi-schen 1000°C und 1100°C unterzogen wurde.

Das mittels des erfindungsgemäßen Verfahrens hergestellte dotierte Quarzglas ist von optisch guter Qualität und eignet sich vorteilhaft für Bestandteile von elektrischen Lampen. Insbesondere kann dieses Quarzglas für Außenkolben und Entladungsgefäße von Hochdruckentladungslampen sowie für Lampenkolben von Halogenglühlampen eingesetzt werden. Aus dem erfindungsgemäßen Quarzglas bestehende Lampengefäßteile absorbieren weitgehend die von der Entladung bzw. der Glühwendel erzeugte UV-Strahlung. Ferner hat sich gezeigt, daß bei dem relativ hohen Cergehalt des Quarzglases die Fluoreszenzstrahlung des Cers den Blauanteil der von der Lichtquelle direkt abgegebenen Strahlung unterstützt. Außerdem führt die UV-Absorption im cerhaltigen Quarzglas zu einer zusätzlichen Erwärmung der Lampengefäßteile und bewirkt eine Verbesserung der Lampenbetriebsbedingungen, da nunmehr wegen der absorptionsbedingten Erwärmung der Gefäßteile eine geringere elektrische Energiezufuhr zur Aufrechterhaltung der Betriebstemperatur benötigt wird.

Die Erfindung wird nachstehend anhand zweier besonders bevorzugter Ausführungsbeispiele näher erläutert.

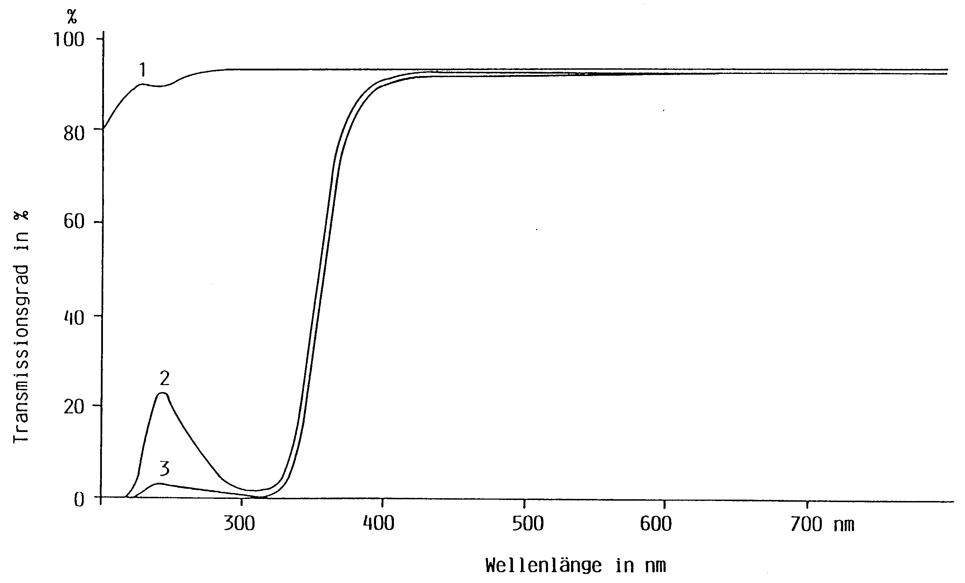

Die Figur zeigt drei Transmissionskurven für unter-schiedliche Quarzglasrohre mit jeweils einer Wand-stärke von 1,0 mm. Auf der horizontalen Achse ist die Wellenlänge der elektromagnetischen Strahlung in nm und auf der vertikalen Achse ist der Anteil der transmittierten Strahlung aufgetragen. Kurve 1 verdeutlicht das Transmissionsverhalten für undotiertes Quarzglas, während die Kurven 2 und 3 das Transmissionsverhalten von mit 0,51 Gewichtsprozent CeAlO₃ und mit 0,04 Gewichtsprozent TiO₂ dotiertem Quarzglas illustrieren. Das zur Transmissionskurve 3 gehörende Quarzglasrohr wurde außerdem ca. 10 Stunden in einer O₂-Atmosphäre bei etwa 1100°C geglüht.

Als Ausgangsprodukt für die Quarzschmelze dienen pulverförmiges, windgesichtetes Ceraluminat (CeAlO₃), das eine mittlere Korngröße von ca. 5 µm besitzt, und pegmatitischer, gereinigter Quarzsand sowie pulverförmiges Titanoxid (TiO₂). Dem gereinigten, pegmatitischen Quarzsand werden dabei gemäß des besonders bevorzugten Ausführungsbeispiels ca. 0,51 Gewichtsprozent Ceraluminat (CeAlO₃) und ca. 0,04 Gewichtsprozent Titanoxid (TiO₂) in einem Homogenisator homogen beigemischt. Dieses Rohstoffgemisch wird dann in einem zylindrischen Wolframtiegel unter He/H₂-Atmosphäre bei etwa 2200°C kontinuierlich zu Quarzglas erschmolzen und mittels Molybdändüse und Molybdändorn vertikal nach unten kontinuierlich zu einem Quarzglasrohr mit einer Wandstärke von 1,0 mm ausgezogen.

Weitere, für die vorliegende Erfindung unwesentliche Details des Quarzglaserschmelzungsverfahrens sind beispielsweise in der US 3 764 286 ausführlich beschrieben und sollen daher hier nicht näher erläutert werden.

Bei einem zweiten Ausführungsbeispiel werden die fertigen Quarzglasrohre anschließend noch einem etwa zehnstündigen Glühprozeß in einer O₂-Atmosphäre bei ca. 1100°C unterzogen.

Die Quarzglasrohre, gemäß der beiden oben beschriebenen Ausführungsbeispiele, werden vorzugsweise zu Außenkolben und Entladungsgefäßen von Hochdruckentladungslampen oder zu Lampenkolben für Halogenglühlampen weiterverarbeitet.

Zur Herstellung des Dotierstoffes Ceraluminat wird eine Ansatzmischung, bestehend aus Ceroxid, Aluminiumoxid und einer Mineralisatorhilfe verwendet. Als Mineralisatorhilfe eignen sich geringe Zusätze von Borsäure, Alkali-, Erdalkalitetraborate, Ammoniumfluoride, Alkali- und Erdalkalifluoride jeweils allein oder in Kombination miteinander. In der Ansatz-mischung ist ein etwa zehnprozentiger Aluminiumoxidüberschuß bzgl. der stöchiometrischen Ceraluminatzusammensetzung enthalten, d.h., daß für das Molverhältnis von Aluminiumoxid zu Ceroxid annähernd folgende Beziehung erfüllt ist:

Al₂O₃ : CeO₂ = 0,55 : 1

Die Tabelle 1 enthält fünf Ausführungsbeispiele für die Ansatzmischung zur Herstellung des Quarzglasdotierstoffes Ceraluminat (CeAlO₃).

**Tabelle 1**

| Nr. | Komponenten der Ansatzmischung (g) | | | | | |
|---|---|---|---|---|---|---|
| | Al₂O₃ | CeO₂ | H₃BO₃ | BaF₂ | MgF₂ | NH₄HF₂ |
| 1 | 112,16 | 344,24 | 0,45 | - | - | - |
| 2 | 112,16 | 344,24 | 0,45 | 0,90 | - | - |
| 3 | 112,16 | 344,24 | 0,45 | - | 0,72 | 0,18 |
| 4 | 244,70 | 688,50 | 0,30 | - | - | - |
| 5 | 5384 | 16524 | 7,2 | - | - | - |

Bei einem bevorzugten Ausführungsbeispiel wird diese Ansatzmischung in einem Taumel- oder Rhönradmischer in Kunststofflaschen mit Hilfe von Aluminiumoxidkugeln oder mit Kunststoff beschichteten Stahlkugeln homogenisiert und zur Bildung von Ceraluminat in Korundtiegeln bei etwa 1560°C unter reduzierender Gasatmosphäre (N₂/H₂-Atmosphäre mit z.B. 80% Stickstoff und 20% Wasserstoffanteil) ungefähr 4 Stunden geglüht. Nach Abkühlung auf Raumtemperatur wird das geglühte Material in einer Mörsermühle gemahlen und anschließend gesiebt. Um eine ausreichende Feinkörnigkeit des Ceraluminats zu erreichen, erfolgt eine Abtrennung des grobkörnigen Anteils durch eine Sichtung des Siebgutes in einem Fliehkraftwindsichter, so daß die mittlere Korngröße des Ceraluminats etwa 5 µm beträgt. Die Verkleinerung des Glühmaterials kann auch mittels einer Fließbettgegenstrahlmühle mit integriertem Sichter durchgeführt werden.

Die Erfindung beschränkt sich nicht auf die oben erläuterten Ausführungsbeispiele. Beispielsweise ist es möglich, die Konzentration des Ceraluminats und/oder des Titanoxids im Rohstoffgemisch zur Erschmelzung des Quarzglases zu verändern. Sinnvollerweise sollte der Ceraluminatanteil ca. 0,1 bis 2 Gewichtsprozent betragen. Die obere Grenze wird hier durch den Wunsch nach möglichst blasenfreiem Quarzglas und die untere Grenze durch die gewünschte Abschwächung der UV-Strahlen im dotierten Quarzglas bestimmt. Allerdings ist es auch möglich, den Ceraluminatanteil in der Quarzschmelze bis auf 5 Gewichtsprozent zu steigern. Bei dieser Konzentration ist dann die Löslichkeitsgrenze des Cers im Quarz erreicht.

Auf die Beigabe von Titanoxid kann auch ganz verzichtet werden. Ferner können dem Rohstoffgemisch auch weitere Dotierungsmittel zugesetzt werden, z.B. Aluminiumoxid (Al₂O₃), um die Viskosität und die Entglasungseigenschaften des Quarzglases zu beeinflussen.

Natürlich ist es auch möglich, durch andere Einstellungen bei Molybdändorn und Molybdändüse die Quarzglasrohrgeometrie oder die Quarzglasrohrabmessungen zu variieren. Ferner können auch andere Formen von Quarzglaskörpern, beispielsweise Stäbe, produziert werden.

## Patentansprüche

1. Verfahren zur Herstellung eines dotierten Quarzglases, wobei das Quarzglas aus Quarzsand oder/und Bergkristall zusammen mit Dotierungsmitteln erschmolzen wird, dadurch gekennzeichnet, daß zumindest Ceraluminat (CeAlO₃) als Dotierungsmittel zugesetzt ist.

2. Herstellungsverfahren nach Anspruch 1, dadurch gekennzeichnet, daß das Ceraluminat (CeAlO₃) in Pulverform dem Quarzsand oder/und dem Bergkristall homogen beigemischt ist.

3. Herstellungsverfahren nach Anspruch 2, dadurch gekennzeichnet, daß die mittlere Korngröße des Ceraluminatpulvers kleiner oder gleich 20 µm ist.

4. Herstellungsverfahren nach Anspruch 3, dadurch gekennzeichnet, daß das Ceraluminatpulver mittels einer Festkörperreaktion durch Glühung einer Ansatzmischung, die zumindest Ceroxid (CeO₂) und Aluminiumoxid (Al₂O₃) enthält, hergestellt wird.

5. Herstellungsverfahren nach Anspruch 4, dadurch gekennzeichnet, daß die Ansatzmischung Borsäure (H₃BO₃) als Mineralisatorhilfe bzw. als Schmelzmittelzusatz enthält.

6. Herstellungsverfahren nach Anspruch 4, dadurch gekennzeichnet, daß für das Molverhältnis der Ausgangskomponenten Aluminiumoxid (Al₂O₃) und Ceroxid (CeO₂) in der Ansatzmischung folgende Beziehung gilt:
Al₂O₃ : CeO₂ ≧ 0,5 : 1

7. Herstellungsverfahren nach Anspruch 1, dadurch gekennzeichnet, daß dem Quarzsand oder/und dem Bergkristall bis zu 5 Gewichtsprozent Ceraluminat (CeAlO₃) zugesetzt ist.

8. Herstellungsverfahren nach Anspruch 7, dadurch gekennzeichnet, daß dem Quarzsand oder / und dem Bergkristall 0,1 bis 2,0 Gewichtsprozent Ceraluminat (CeAlO₃) zugesetzt ist.

9. Herstellungsverfahren nach Anspruch 1, dadurch gekennzeichnet, daß als weiteres Dotierungsmittel Titanoxid (TiO₂) dem Quarzsand oder / und dem Bergkristall homogen beigemischt ist.

10. Herstellungsverfahren nach Anspruch 1, dadurch gekennzeichnet, daß das dotierte Quarzglas in einem Wolframtiegel unter Schutzgasatmosphäre kontinuierlich erschmolzen und an der Glasaustrittsöffnung des Tiegels kontinuierlich zu Quarzglasrohr ausgezogen wird.

11. Herstellungsverfahren nach Anspruch 10, dadurch gekennzeichnet, daß das Quarzglasrohr einem Glühprozeß in einer Sauerstoffatmosphäre unterzogen wird.

## Claims

1. Method for producing a doped quartz glass, the quartz glass being formed by fusion of quartz sand and/or rock crystal together with dopants, characterized in that at least cerium aluminate (CeAlO₃) is added as dopant.

2. Method of production according to Claim 1, characterized in that the cerium aluminate (CeAlO₃) is homogeneously admixed in powder form to the quartz sand and/or to the rock crystal.

3. Method of production according to Claim 2, characterized in that the average particle size of the cerium aluminate powder is less than or equal to 20 µm.

4. Method of production according to Claim 3, characterized in that the cerium aluminate powder is produced by means of a solid-state reaction by annealing an initial mixture which contains at least cerium oxide (CeO₂) and aluminium oxide (Al₂O₃).

5. Method of production according to Claim 4, characterized in that the initial mixture contains boric acid (H₃BO₃) as mineralizing agent or as flux additive.

6. Method of production according to Claim 4, characterized in that the molar ratio of the starting components aluminium oxide (Al₂O₃) and cerium oxide (CeO₂) in the initial mixture satisfies the following relationship:
Al₂O₃ : CeO₂ ≧ 0.5 : 1

7. Method of production according to Claim 1, characterized in that up to 5 per cent by weight of cerium aluminate (CeAlO₃) is added to the quartz sand and/or to the rock crystal.

8. Method of production according to Claim 7, characterized in that from 0.1 to 2.0 per cent by weight of cerium aluminate (CeAlO₃) is added to the quartz sand and/or to the rock crystal.

9. Method of production according to Claim 1, characterized in that titanium oxide (TiO₂) is homogeneously admixed as additional dopant to the quartz sand and/or to the rock crystal.

10. Method of production according to Claim 1, characterized in that the doped quartz glass is continuously melted in a tungsten crucible under a protective gas atmosphere and continuously extracted from the glass outlet opening of the crucible to form a quartz glass tube.

11. Method of production according to Claim 10, characterized in that the quartz glass tube is subjected to an annealing process in an oxygen atmosphere.

## Revendications

1. Procédé de fabrication d'un verre de quartz dopé, dans lequel le verre de quartz est obtenu en faisant fondre du sable de quartz ou/et de cristal de roche avec des agents de dopage, caractérisé en ce qu'on ajoute au moins de l'aluminate de cérium (CeAlO₃) comme agent de dopage.

2. Procédé de fabrication selon la revendication 1, caractérisé en ce que l'aluminate de cérium (CeAlO₃) est mélangé sous forme de poudre au sable de quartz ou/et au cristal de roche d'une manière homogène.

3. Procédé de fabrication selon la revendication 2, caractérisé en ce que la granulométrie moyenne de la poudre d'aluminate de cérium est inférieure ou égale à 20 µm.

4. Procédé de fabrication selon la revendication 3, caractérisé en ce qu'on prépare la poudre d'aluminate de cérium par une réaction de corps solides, par calcination d'un mélange réactionnel qui contient au moins de l'oxyde de cérium (CeO₂) et de l'oxyde d'aluminium (Al₂O₃).

5. Procédé de fabrication selon la revendication 4, caractérisé en ce que le mélange réactionnel contient de l'acide borique (H₃BO₃) comme auxiliaire de minéralisation ou comme fondant.

6. Procédé de fabrication selon la revendication 4, caractérisé en ce que le rapport molaire des constituants de départ, l'oxyde d'aluminium (Al₂O₃) et l'oxyde de cérium (CeO₂) dans le mélange réactionnel obéit à la relation :
Al₂O₃:CeO₂ ≧ 0,5:1

7. Procédé de fabrication selon la revendication 1, caractérisé en ce qu'on ajoute au sable de quartz ou/et au cristal de roche jusqu'à 5 % en poids d'aluminate de cérium (CeAlO₃).

8. Procédé de fabrication selon la revendication 7, caractérisé en ce qu'on ajoute au sable de quartz ou/et au cristal de roche 0,1 à 2,0 % en poids d'aluminate de cérium (CeAlO₃).

9. Procédé de fabrication selon la revendication 1, caractérisé en ce qu'on mélange de manière homogène au sable de quartz ou/et au cristal de roche, comme agent de dopage supplémentaire, de l'oxyde de titane (TiO₂).

10. Procédé de fabrication selon la revendication 1, caractérisé en ce qu'on fond en continu le verre de quartz dopé dans un creuset de tungstène, en atmosphère de gaz protecteur, et en ce qu'on l'étire en continu, à l'orifice de sortie du verre du creuset, pour donner un tube de verre de quartz.

11. Procédé de fabrication selon la revendication 10, caractérisé en ce qu'on soumet le tube de verre de quartz à une opération de calcination en atmosphère d'oxygène.
